(19) **Europäisches Patentamt / European Patent Office / Office européen des brevets**

(11) **EP 1 928 156 A1**

(12) **EUROPEAN PATENT APPLICATION**

(43) Date of publication:
**04.06.2008 Bulletin 2008/23**

(51) Int Cl.:
*H04M 1/02* (2006.01)

(21) Application number: **07021323.6**

(22) Date of filing: **31.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **01.11.2006 JP 2006297989**

(71) Applicant: **Sharp Kabushiki Kaisha Osaka-shi, Osaka 545-8522 (JP)**

(72) Inventors:
• **Honda, Toshiyuki**
**Higashihiroshima-shi**
**Hiroshima 739-2115 (JP)**
• **Mizuguchi, Chikao**
**Higashihiroshima-shi**
**Hiroshima 739-0142 (JP)**

(74) Representative: **Müller - Hoffmann & Partner Patentanwälte,**
**Innere Wiener Strasse 17**
**81667 München (DE)**

(54) **Portable information terminal performing display operation according to state of display means and method of controlling the same**

(57) In a mobile telephone (1), a main display unit (2a) can be changed from a portrait-oriented state to a landscape-oriented state or the landscape-oriented state to the portrait-oriented state. A screen extracted from a virtual screen is displayed on the main display unit (2a). When the state of the main display unit (2a) is changed between the portrait-oriented state and the landscape-oriented state, the display area extracted from the virtual screen to be displayed on the main display unit (2a) after the change in state is decided based on a range which has beens extracted from the virtual screen before the change in state.

FIG.19B

**(Cont. next page)**

EP 1 928 156 A1

FIG.19A

**Description**

This nonprovisional application is based on Japanese Patent Application No. 2006-297989 filed with the Japan Patent Office on November 1, 2006, the entire contents of which are hereby incorporated by reference.

BACKGROUND OF THE INVENTION

Field of the Invention

The present invention relates to a portable information terminal, particularly to a portable information terminal that performs display operation in display means according to a state of the display means and a method of controlling the same.

Description of the Background Art

Conventionally, among portable information terminals such as a mobile telephone, there are ones in which the state of a display unit is changed from a portrait-oriented state to a landscape-oriented state or from the landscape-oriented state to the portrait-oriented state by rotating a housing provided with the display unit.

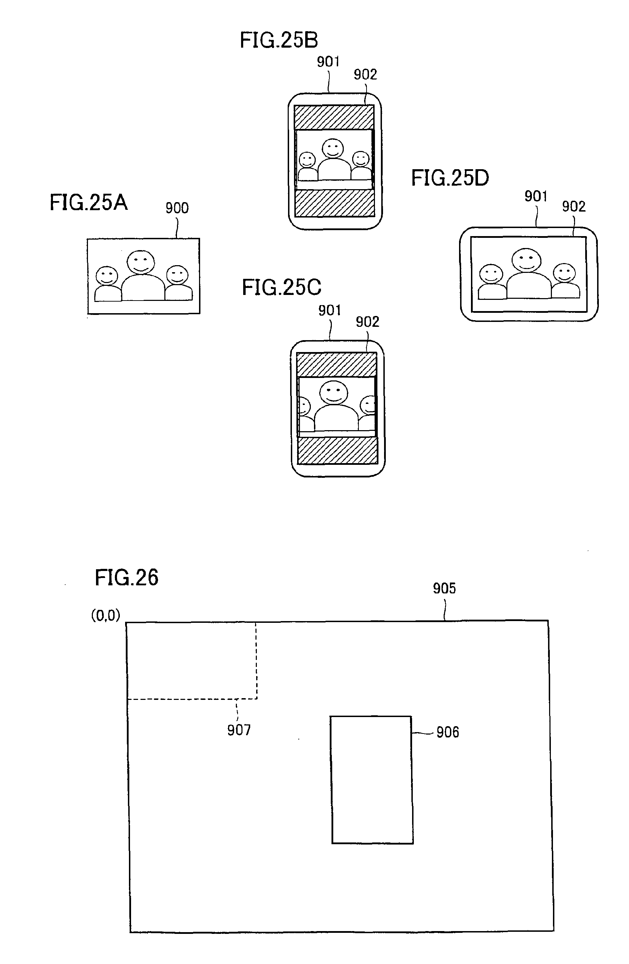

Regarding such portable information terminals, for example, Japanese Patent Laying-Open No. 2004-356975 discloses display modes in the portrait-oriented state and landscape-oriented state of a display unit. Referring to Figs. 25A to 25D, contents thereof will be described below.

In the case where a landscape-oriented image 900 shown in Fig. 25A is displayed on a display unit of a portable information terminal, when a display unit 902 provided in a housing 901 is in the portrait-oriented state, image 900 is displayed while reduced so as to be matched with a size in a horizontal direction of display unit 902 as shown in Fig. 25B, or image 900 is displayed as it is while right and left of image 900 are cut such that the center of image 900 is aligned with the center of display unit 902 as shown in Fig. 25C. When display unit 902 is in the landscape-oriented state as shown in Fig. 25D, image 900 is displayed as it is on display unit 902.

In a conventional portable information terminal, when a display unit is in the portrait-oriented state as shown in Fig. 26, image data located in an area 906 having a portrait-oriented rectangular shape corresponding to the portrait-oriented state is cut out from a virtual screen 905, and the image is displayed on the display unit. In this state of things, when the display unit is changed to the landscape-oriented state, the image data cut out from virtual screen 905 is sometimes changed from area 906 to an area 907 having a landscape-oriented rectangular shape corresponding to the landscape-oriented state.

In such portable information terminals, the shape of the area cut out from virtual screen 905 is changed (from portrait-oriented shape to landscape-oriented shape) according to the change in state of the display unit, and a reference position (coordinate at an upper-left end of the area) of the area cut out from virtual screen 905 is changed so as to be matched with the upper-left end of virtual screen 905.

As described above, in the background art, there are various problems to be addressed in the case where the state of the display unit is changed; for example, disadvantageously the whole of display area of the display unit cannot effectively be utilized as shown in Figs. 25B and 25C, and the location to be a display target on virtual screen 905 is greatly changed before and after the change in state of the display unit as shown in Fig. 26.

SUMMARY OF THE INVENTION

In view of the foregoing, an object of the present invention is to provide a portable information terminal capable of properly changing the display contents in the display unit when the state of the display unit is changed and a method of controlling the same.

A first aspect according to the present invention provides a portable information terminal including display means; support means for supporting the display means between a first state and a second state different from the first state; detection means for detecting a state of the display means; generation means for generating a virtual screen; and extraction means for extracting image data in a range corresponding to a display area of the display means from the virtual screen, wherein the extraction means decides an extraction range of the image data corresponding to the display area of the display means after a change in state based on a range before the change in state, when the detection means detects that the state of the display means is changed between the first state and the second state.

In the portable information terminal according to the first aspect of the present invention, the extraction means preferably decides the extraction range such that image data displayed at a particular position in the display area before the change in state is displayed at the particular position in the display area after the change in state.

In the portable information terminal according to the first aspect of the present invention, the particular position is preferably located at an upper-left end of the display area.

In the portable information terminal according to the first aspect of the present invention, the particular position is preferably located at a center in a vertical direction and a horizontal direction of the display area.

In the portable information terminal according to the first aspect of the present invention, the support means preferably rotatably supports the display means, the display means is preferably rotated by a constant angle to change the state between the first state and the second state, and the extraction means preferably decides that a range corresponding to the display area before the change in state, the range being is rotated by the constant angle about a position on the virtual screen of image data displayed at a predetermined position of the display area, is set to a range of image data extracted from the virtual screen according to the display area after the change in state.

In the portable information terminal according to the first aspect of the present invention, the predetermined position is preferably located at a center position of an area which is focused on and displayed in the display area.

In the portable information terminal according to the first aspect of the present invention, the extraction means preferably decides that a range after a range corresponding to the display area before the change in state is rotated counterclockwise by the constant angle is set to a range of image data to be extracted according to the display area after the change in state, when the predetermined position is located in an area of an upper half of the display area of the display means, and the extraction means preferably decides that a range after a range corresponding to the display area before the change in state is rotated clockwise by the constant angle is set to a range of image data to be extracted according to the display area after the change in state, when the predetermined position is located in an area of a lower half of the display area of the display means.

A second aspect according to the present invention provides a method of controlling a portable information terminal in which display means is supported between a first state and a second state different from the first state, the method including the steps of generating a virtual screen; detecting a state of the display means; and deciding a range of image data to be extracted from the virtual screen according to a display area after a change in state based on a range of image data extracted from the virtual screen corresponding to the display area of the display means before the change in state upon detecting that the state of the display means is changed between the first state and the second state.

According to the present invention, the image data is extracted in the range from the virtual screen according to the display area of the display means, and when the state of the display means is changed, the range of the image data corresponding to the display area after the change in state is decided based on the range before the change in state.

Accordingly, even if the state of the display means is changed, the image data is extracted in the range corresponding to the display area after the change in state, so that the display can be performed without wasting part of the display area. Additionally, the range after the change in state is decided based on the range before the change in state, so that a display target after the change in state can be correlated with a display target before the change in state.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a perspective view showing a state in which a mobile telephone according to an embodiment of the present invention is folded.

Fig. 2 is a perspective view showing a state in which housings of the mobile telephone of Fig. 1 are unfolded.

Fig. 3 is a perspective view showing a state in which a first housing of the mobile telephone is rotated clockwise by about 45 degrees from the state shown in Fig. 2.

Fig. 4 is a perspective view showing a state in which the first housing of the mobile telephone is rotated clockwise by about 90 degrees from the state shown in Fig. 2.

Fig. 5 is a rear view showing the mobile telephone of Fig. 2.

Fig. 6 is a rear view showing the mobile telephone of Fig. 3.

Fig. 7 is a rear view showing the mobile telephone of Fig. 4.

Fig. 8 is a front view showing a hinge portion in the mobile telephone of Fig. 2.

Fig. 9 is a front view showing the hinge portion in the mobile telephone of Fig. 3.

Fig. 10 is a front view showing the hinge portion in the mobile telephone of Fig. 4.

Fig. 11 schematically shows an electric configuration of the mobile telephone of Fig. 1.

Fig. 12 is a control block diagram of the mobile telephone of Fig. 1.

Fig. 13 schematically shows display areas corresponding to a virtual screen and a main display unit in the mobile telephone of Fig. 1.

Fig. 14 is a flowchart showing a process of changing a display content of the main display unit according to a change in state of the main display unit in the mobile telephone of Fig. 1.

Fig. 15 is a flowchart showing a process of changing the display content of the main display unit according to the change in state of the main display unit in the mobile telephone of Fig. 1.

Fig. 16 is a flowchart showing a process of changing the display content of the main display unit according to the change in state of the main display unit in the mobile telephone of Fig. 1.

Fig. 17 is a flowchart showing a process of changing the display content of the main display unit according to the change in state of the main display unit in the mobile telephone of Fig. 1.

Fig. 18 is a flowchart showing a process of changing the display content of the main display unit according to the change in state of the main display unit in the mobile telephone of Fig. 1.

Figs. 19A and 19B show an example of a change mode of the display area according to the change in state of the main display unit in the mobile telephone of Fig. 1.

Figs. 20A and 20B show another example of the change mode of the display area according to the change in state of the main display unit in the mobile telephone of Fig. 1.

Fig. 21 shows a modification of the process (reference coordinate setting process after the display area is rotated) of Fig. 15.

Figs. 22A and 22B show still another example of the change mode of the display area according to the change in state of the main display unit in the mobile telephone of Fig. 1.

Figs. 23A and 23B show still another example of the change mode of the display area according to the change in state of the main display unit in the mobile telephone of Fig. 1.

Figs. 24A and 24B show another modification of the process (reference coordinate setting process after the display area is rotated) of Fig. 15.

Figs. 25A to 25D are diagrams for explaining an example of a change mode of the display content in a display unit according to the change in state of a display unit in a conventional portable information terminal.

Fig. 26 is a diagram for explaining another example of the change mode of the display content in the display unit according to the change in state of the display unit in the conventional portable information terminal.

DESCRIPTION OF THE PREFERRED EMBODIMENTS

A mobile telephone as an exemplary embodiment of a portable information terminal according to the present invention will be described below with reference to the drawings.

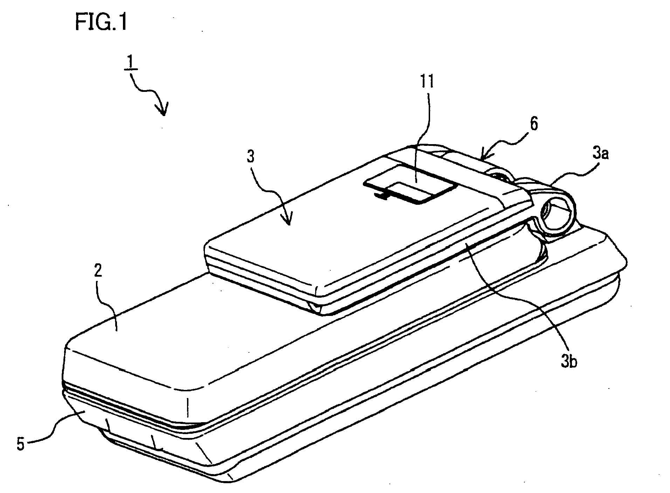

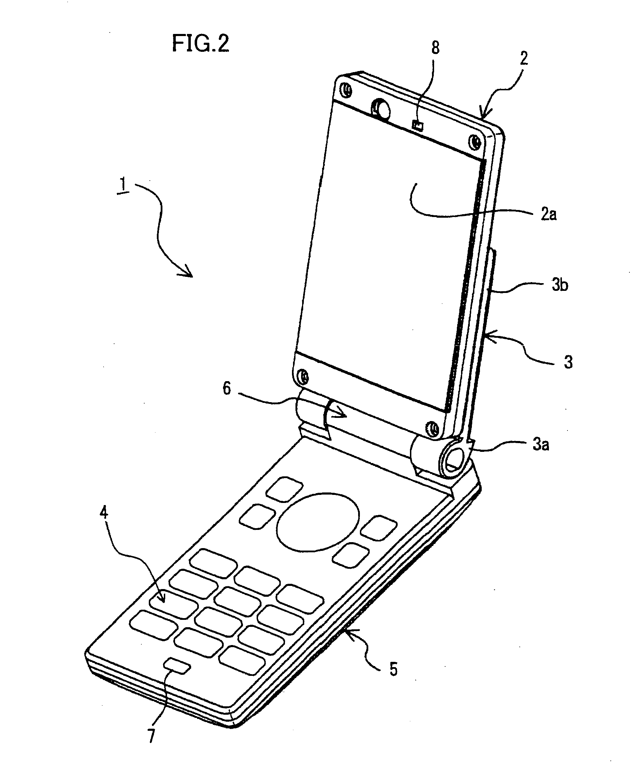

Figs. 1 and 2 are perspective views showing a mobile telephone according to an embodiment of the present invention. A mobile telephone 1 mainly includes a first housing 2, an second housing 5, and a hinge portion 3 which couples housings 2 and 5 to each other. Fig. 1 shows the state in which the housings are closed (folded), and Fig. 2 shows the state in which the housings are unfolded.

Referring to Figs. 1 and 2, a main display unit 2a and a receiver 8 are disposed in an inner surface of first housing 2. The inner surface faces second housing 5 while mobile telephone 1 is folded. Main display unit 2a is formed in a rectangular shape, and is disposed such that a longitudinal direction thereof is aligned with a longitudinal direction of first housing 2. Receiver 8 is disposed in an end portion on the side opposite hinge portion 3 in first housing 2.

Many operation keys 4 are arranged on an inner surface of second housing 5. The inner surface of second housing 5 faces first housing 2 while mobile telephone 1 is folded. A transmitting microphone 7 is disposed on the inner surface of second housing 5. Transmitting microphone 7 is disposed in an end portion on the side opposite hinge portion 3 in second housing 5.

Since mobile telephone 1 is a folding type, a user can carry compactly-folded mobile telephone 1, and can perform pressing operation of operation keys 4 while viewing the display on main display unit 2a in the state where the housings are unfolded. As shown in Fig. 2, the user sets main display unit 2a of mobile telephone 1 in the portrait-oriented state, brings receiver 8 close to an ear of the user while bringing transmitting microphone 7 close to the mouth, so that the user can place a call in a suitable manner.

In order to transmit and receive high-quality sound, receiver 8 is preferably brought close to the ear of the user while transmitting microphone 7 is brought close to the mouth. Therefore, it is necessary that a certain distance be ensured between transmitting microphone 7 and receiver 8. In mobile telephone 1, transmitting microphone 7 is disposed in the end portion on the side opposite hinge portion 3 in second housing 5, and receiver 8 is disposed in the end portion on the side opposite hinge portion 3 in first housing 2, which allows the distance between transmitting microphone 7 and receiver 8 to be ensured when main display unit 2a is in the portrait-oriented state.

Hinge portion 3 has a configuration in which a coupling portion 3 a and a retaining portion 3b are integrally formed. Coupling portion 3a is rotatably coupled to second housing 5, and retaining portion 3b retains first housing 2 while facing an outer surface of first housing 2. Coupling portion 3a includes two cylindrical bodies. The two cylindrical bodies are formed at one end of retaining portion 3b so as to be projected while spaced apart from each other by a predetermined distance. In one end portion in the longitudinal direction in the inner surface of second housing 5, a cylindrical body 6 is formed to extend in a crosswise direction. Cylindrical body 6 is disposed between two coupling portions 3a coaxially with coupling portions 3a, and cylindrical body 6 and coupling portions 3 a are rotatably attached. Therefore, hinge portion 3 is rotatably coupled to second housing 5.

Retaining portion 3b is formed in a rectangular plate shape, and faces about half of the outer surface of first housing 2 on the side of hinge portion 3 when main display unit 2a is in the portrait-oriented state. Retaining portion 3b rotatably retains first housing 2 in a plane parallel to main display unit 2a, and first housing 2 can be rotated while an inclination angle is maintained with respect to second housing 5. A sub-display unit 11 is disposed in the outer surface on the opposite side from first housing 2 of retaining portion 3b. Sub-display unit 11 mainly performs display while the housings are folded.

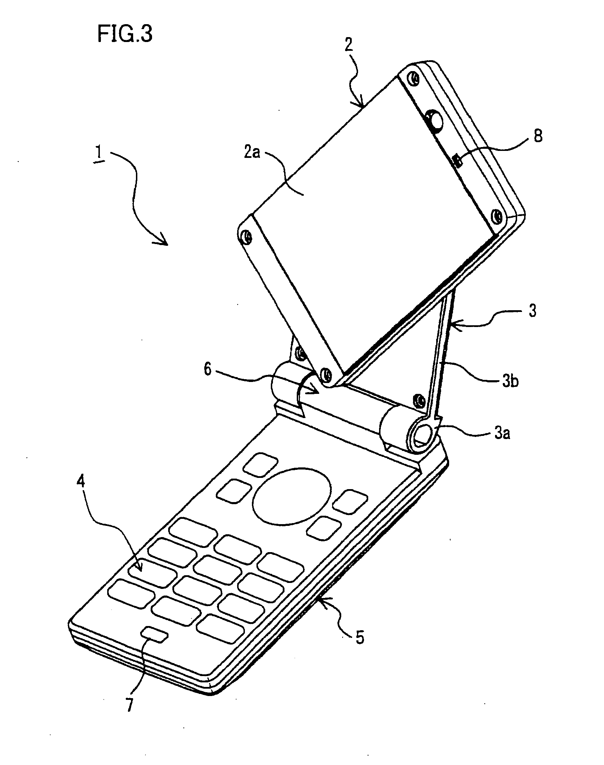

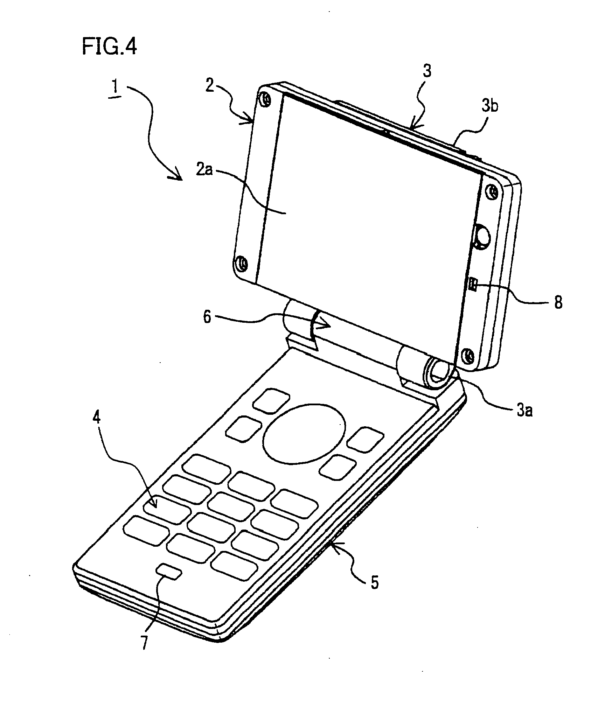

Fig. 3 shows mobile telephone 1 in the state where first housing 2 is rotated clockwise by about 45 degrees from the state shown in Fig. 2, and Fig. 4 shows mobile telephone 1 in the state where first housing 2 is rotated clockwise by 90 degrees from the state shown in Fig. 2. Referring to Figs. 3 and 4, while gripping second housing 5, the user can rotate first housing 2 by rotating first housing 2 within 90 degrees in the plane parallel to main display unit 2a. In the specification, the state of main display unit 2a shown in Fig. 2 is referred to as the portrait-oriented state (state in which longitudinal direction of main display unit 2a is substantially aligned with a vertical direction), and the state of main display unit 2a shown in Fig. 4 is referred to as the landscape-oriented state (state in which longitudinal direction of main display unit 2a is substantially aligned with a horizontal direction).

In mobile telephone 1, television broadcast can be viewed. In mobile telephone 1, first housing 2 is rotated from the state of Fig. 2, and main display unit 2a is set to the landscape-oriented state as shown in Fig. 4 through the state of Fig. 3, which allows a good television image to be displayed on main display unit 2a in the landscape-oriented state corresponding to an aspect ratio of the television image. Main display unit 2a is formed in a rectangular shape in which a ratio of a long side and a short side becomes 16:9, and the ratio corresponds to the aspect ratio of the television image used in the general television broadcast.

When first housing 2 is rotated clockwise from the state of Fig. 2, counterclockwise biasing force acts on first housing 2 by biasing means provided in retaining portion 3b of hinge portion 3 until first housing 2 is rotated to the state of Fig. 3. Accordingly, in the state of Fig. 2, first housing 2 is maintained in the state of Fig. 2 by the counterclockwise biasing force acting on first housing 2 unless external force acts thereon.

On the other hand, when first housing 2 is further rotated clockwise beyond the state of Fig. 3, the biasing force acting on first housing 2 is changed into a clockwise direction, and first housing 2 is latched in the state of Fig. 4. Therefore, first housing 2 is maintained in the state of Fig. 4 unless external force acts thereon.

In the present embodiment, mobile telephone 1 is configured such that first housing 2 is not rotated about a rotation axis fixed at a predetermined position, but is rotated about a rotation axis which moves according to the rotation of first housing 2. Therefore, even if portrait-oriented first housing 2 in which one end portion in the longitudinal direction is brought close to second housing 5 as shown in Fig. 2 is rotated by 90 degrees, one end portion in the crosswise direction of first housing 2 is brought close to second housing 5 to form a landscape-oriented state in a compact manner as shown in Fig. 4, and the television screen can be displayed on main display unit 2a to allow television broadcast to be viewed.

While gripping second housing 5, the user rotates first housing 2 from the portrait-oriented state to the landscape-oriented state, so that the user can view the television broadcast without shifting mobile telephone 1 from one hand to the other. At this point, in mobile telephone 1, first housing 2 can smoothly be changed between the portrait-oriented state and the landscape-oriented state by the biasing force acting on first housing 2.

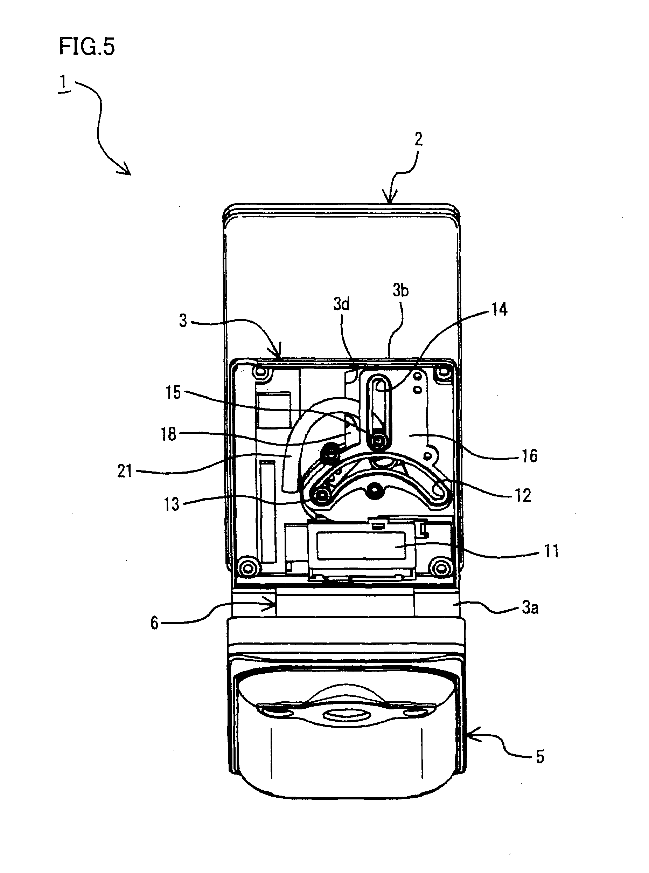

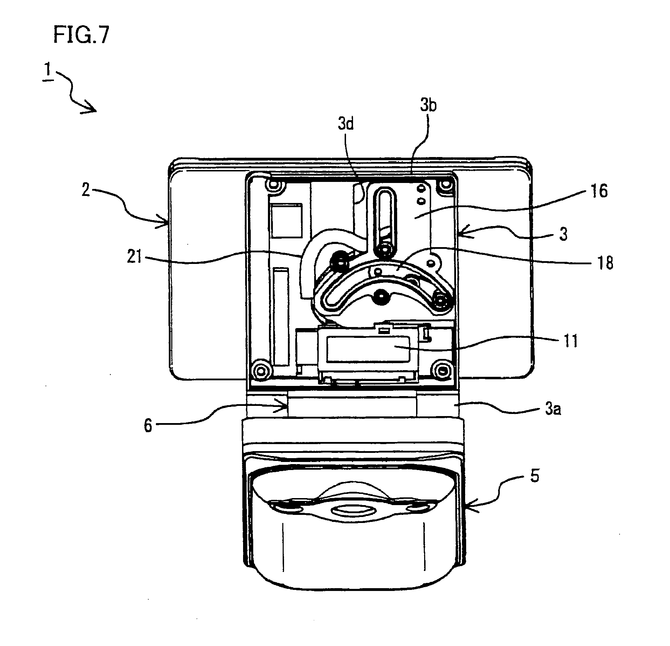

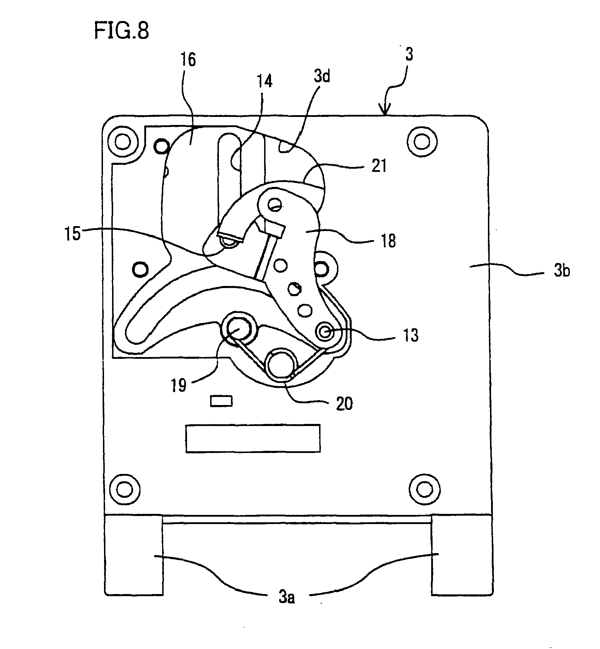

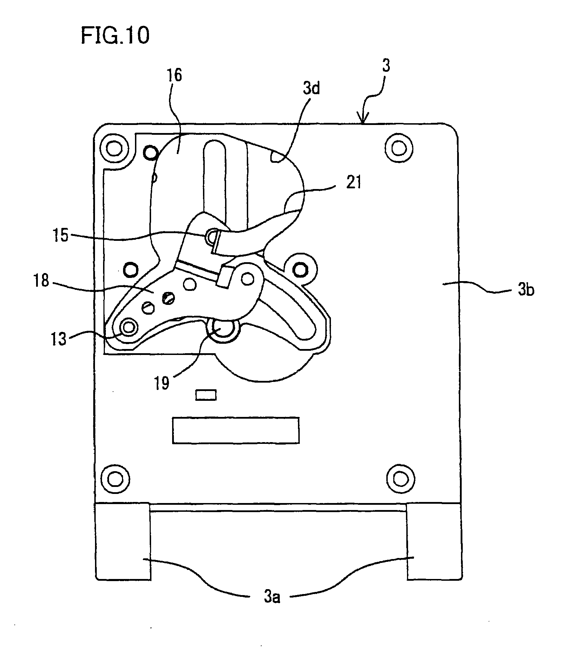

Figs. 5 to 7 are rear views showing mobile telephone 1 in the states of Figs. 2 to 4 respectively. Figs. 5 to 7 are transparent views illustrating a structure of retaining portion 3b. Figs. 8 to 10 are front views showing hinge portion 3 in the states of Figs. 2 to 4 respectively. Figs. 5 and 8 correspond to the portrait-oriented state of Fig. 2, Figs. 6 and 9 correspond to the state of Fig. 3 in which first housing 2 is rotated by about 45 degrees, and Figs. 7 and 10 correspond to the landscape-oriented state of Fig. 4.

Referring to Figs. 5 to 10, a rectangular retaining plate 16 is disposed in retaining portion 3b, and first housing 2 is rotatably retained on retaining plate 16. An arch-like hole 12 extending in a horizontal direction and a straight hole 14 extending in a vertical direction are made in retaining plate 16. A vertex near a central portion of arch-like hole 12 is close to one end portion of straight hole 14, and straight hole 14 extends in a normal direction at the vertex.

A slide shaft 13 and a rotating shaft 15 formed on a rear side of first housing 2 are rotatably engaged in arch-like hole 12 and straight hole 14 respectively. Slide shaft 13 and rotating shaft 15 are integrally formed in a shaft retaining member 18 fixed to a rear surface of first housing 2, and are disposed at positions shifted from the center of first housing 2 while located away from each other with a predetermined distance. Shaft retaining member 18 is engaged with retaining plate 16 in retaining portion 3b with an opening 3d formed in a front surface of retaining portion 3b interposed therebetween.

Shaft retaining member 18 is fixed to retaining plate 16 with a spring (helical coil spring) 20, which is of an example of biasing means, interposed therebetween. One end portion of spring 20 is connected to a slide shaft 13 of shaft retaining member 18, and the other end portion is connected to an attaching shaft 19 formed in retaining plate 16.

Attaching shaft 19 is rotatably disposed on a normal line with respect to the vertex of arch-like hole 12. An end portion of a flexible printed wiring board 21 extended from the side of hinge portion 3 is attached to first housing 2 near rotating shaft 15, and first housing 2 and second housing 5 are electrically connected through flexible printed wiring board 21.

In the portrait-oriented state shown in Figs. 5 and 8, rotating shaft 15 abuts on the lower end of straight hole 14, and slide shaft 13 abuts on one end of arch-like hole 12. In this state, slide shaft 13 is biased toward one end side of arch-like hole 12 by spring 20, and first housing 2 is maintained in that state unless external force acts thereon.

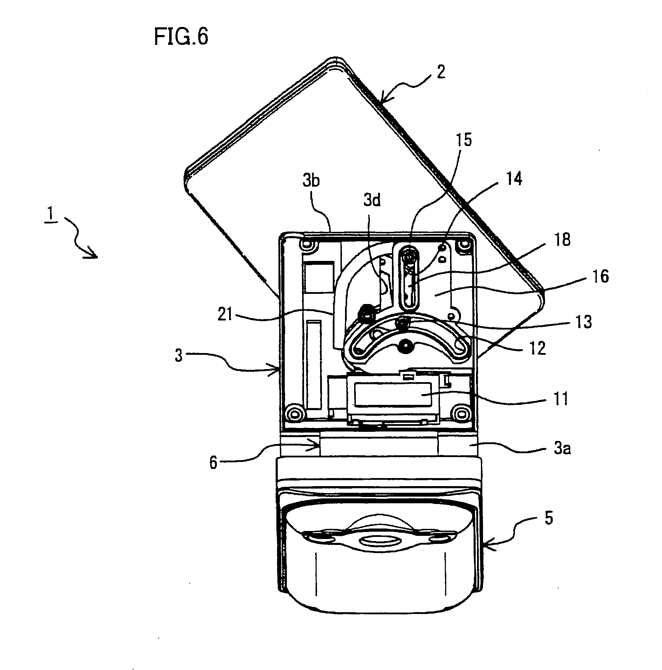

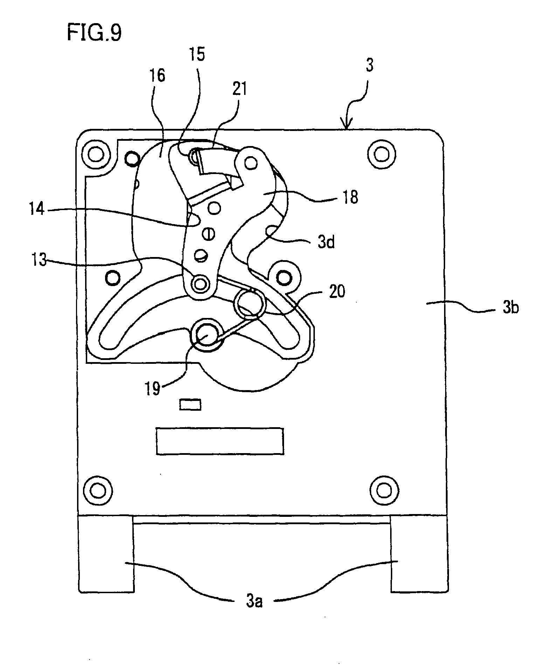

When first housing 2 is rotated from this state with respect to hinge portion 3, slide shaft 13 is moved to the other end side along arch-like hole 12 while rotating shaft 15 is moved upward along straight hole 14. At this point, spring 20 is also rotated about attaching shaft 19, and is shrunk such that one end portion and the other end portion thereof are brought close to each other. In the state where first housing 2 is rotated by about 45 degrees as shown in Figs. 6 and 9, rotating shaft 15 abuts on the upper end of straight hole 14 and slide shaft 13 reaches the vertex of arch-like hole 12.

In this state, one end portion and the other end portion of spring 20 are brought closest to each other. When the first housing 2 is further rotated, the positions of slide shaft 13 and attaching shaft 19 are horizontally reversed, and one end portion and the other end portion of spring 20 are being separated from each other again. Accordingly, when first housing 2 is rotated beyond the rotating position shown in Figs. 6 and 9, first housing 2 is further rotated by the biasing force of spring 20 and becomes the landscape-oriented state shown in Figs. 7 and 10.

When first housing 2 is in the landscape-oriented state, rotating shaft 15 abuts on the lower end of straight hole 14 and slide shaft 13 abuts on the other end of arch-like hole 12. In this state, slide shaft 13 is biased toward the other end side of arch-like hole 12 by spring 20, and first housing 2 is maintained in that state unless external force acts thereon.

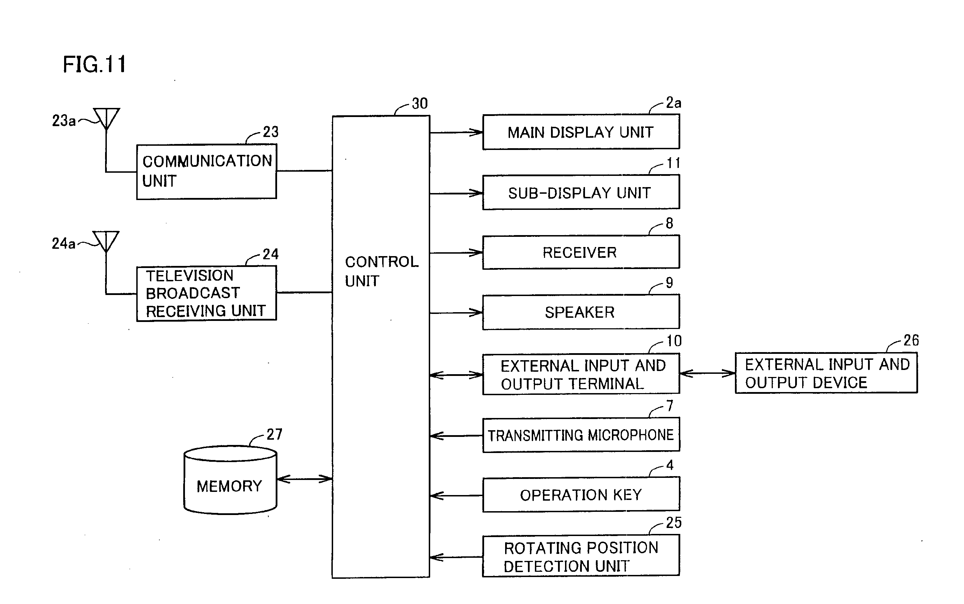

Fig. 11 is a block diagram schematically showing an electric configuration of mobile telephone 1. In addition to main display unit 2a, sub-display unit 11, receiver 8, transmitting microphone 7, and operation keys 4 described above, mobile telephone 1 includes a speaker 9, an external input and output terminal 10, a communication unit 23, a television broadcast receiving unit 24, a rotating position detection unit 25, and a memory 27. A control unit 30 including a processor controls operations of these components.

Speaker 9 outputs sound while the sound is amplified as compared with the case in which receiver 8 outputs the sound, so that the user can hear the sound while the ear is separated from first housing 2. When an external input and output device 26 such as an earphone-microphone is connected to external input and output terminal 10, the sound can be inputted and outputted through external input and output device 26.

Receiver 8 is used while the user comes into contact with the inner surface of first housing 2 by the ear, and speaker 9 and external input and output terminal 10 are used while the ear of user is separated from the inner surface of first housing 2. Accordingly, the user can view the display such as a television image on main display unit 2a when speaker 9 or external input and output terminal 10 is used, although the user cannot view the display of television image when receiver 8 is used.

When a telephone call is placed with a telephone of the other party using speaker 9, the sound from the telephone of the other party is amplified and outputted from speaker 9, and an input signal from transmitting microphone 7 is amplified, so that the user can place a call without gripping mobile telephone 1 in a so-called handsfree state. At this point, the input signal from transmitting microphone 7 is inputted to a cancel circuit to prevent howling. A switch between normal talk with receiver 8 and the handsfree talk can be performed by operating operation key 4.

External input and output terminal 10 is configured to detachably attach a connection terminal of external input and output device 26, and switch is performed between the normal talk with receiver 8 and the talk with external input and output device 26 based on the attachment and detachment of the connection terminal. That is, the normal talk can be switched to the talk with external input and output device 26 by attaching the connection terminal of external input and output device 26 to external input and output terminal 10, and the talk with external input and output device 26 can be returned to the normal talk with receiver 8 by detaching the connection terminal of external input and output device 26 from external input and output terminal 10.

Communication unit 23 performs radio communication with a base station through a communication antenna 23a to transmit and receive call sounds and electronic mails. In the state where the call line is established with the telephone of the other party, a sound signal based on the call sound of the user is transmitted from communication unit 23, and the sound signal based on the call sound of the telephone of the other party is received by communication unit 23, whereby the call sound is transmitted and received on real time basis.

In transmitting and receiving an electronic mail, communication unit 23 transmits and receives character information indicating a subject of the electronic mail and information on an e-mail address of a transmission source in addition to character information of contents of the body of the electronic mail. That is, in transmitting an electronic mail, e-mail information such as the character information on the body of the electronic mail, the character information on the subject, and the e-mail address of the user side, which is created by the user's operation on operation unit 4 of mobile telephone 1 is transmitted to the telephone or a personal computer of the other party (hereinafter communication terminals of the other party with which electronic mails can be transmitted to and received from are collectively referred to as "communication terminal of the other party"). On the other hand, in receiving an electronic mail, e-mail information such as the character information on the body of the electronic mail, the character information on the subject, and the e-mail address of the communication terminal of the other party, which is created by the communication terminal of the other party, is received.

Television broadcast receiving unit 24 receives a television broadcast wave transmitted from a television station through a television broadcast receiving antenna 24a. The television broadcast wave transmitted from the television station includes an analog broadcast wave corresponding to analog broadcast and a digital broadcast wave corresponding to digital broadcast. The digital broadcast wave received by television broadcast receiving unit 24 is one segment broadcast wave for the mobile telephone allocated in a predetermined band of a general digital high-definition broadcast wave, and includes character information such as a closed caption corresponding to the television image and relevant articles in addition to the television image and television sound.

The television image is displayed on main display unit 2a based on the television broadcast wave received by television broadcast receiving unit 24, and the television sound corresponding to the television image is outputted from speaker 9 or external input and output terminal 10, whereby television broadcast can be viewed. The character information included in the television broadcast wave is extracted and displayed on main display unit 2a, so that the character information such as a closed caption can be displayed along with the television image.

Rotating position detection unit 25 is configured by a mechanical or electrical switch to detect a rotating position of first housing 2. Rotating position detection unit 25 is rotating operation detection means for detecting the rotating operation of first housing 2 by the user.

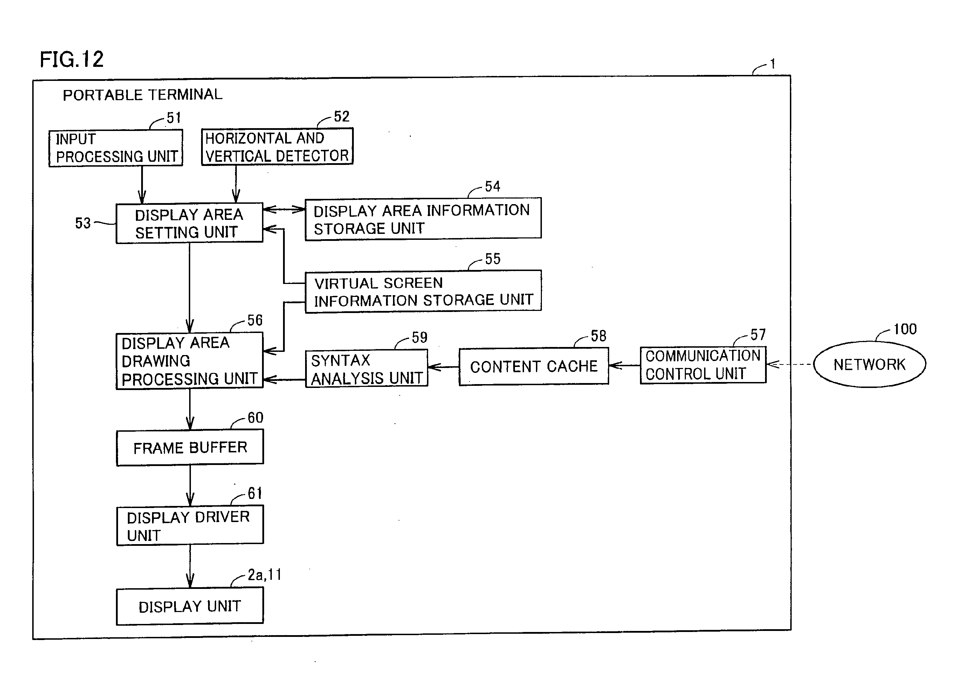

Referring to Fig. 12, mobile telephone 1 includes an input processing unit 51, a horizontal and vertical detector 52, a display area setting unit 53, a display area information storage unit 54, a virtual screen information storage unit 55, a display area drawing processing unit 56, a communication control unit 57, a content cache 58, a syntax analysis unit 59, a frame buffer 60, and a display driver unit 61.

Input processing unit 51 notifies display area setting unit 53 of information corresponding to the operation performed on operation key 4. In addition to the keys constituting operation key 4, mobile telephone 1 may include input means such as a bar, a track ball, and a touch panel, and input processing unit 51 is configured to notify display area setting unit 53 of the information corresponding to operation contents performed on the input means.

Horizontal and vertical detector 52 detects whether main display unit 2a is in the portrait-oriented state or the landscape-oriented state based on the output of rotating position detection unit 25, and horizontal and vertical detector 52 notify display area setting unit 53 and display driver unit 61.

Display area setting unit 53 takes out resolution of the virtual screen from virtual screen information storage unit 55, takes out a reference position or resolution and positional information of pointer of the display area currently displayed from display area information storage unit 54, and controls which area on the virtual screen is displayed on main display unit 2a (which area is extracted for display). When the area in the virtual screen displayed on main display unit 2a is changed, display area setting unit 53 stores a reference coordinate of the display area after the change in display area information storage unit 54.

Display area information storage unit 54 is configured by a memory for storing information on the current display area (area where data is extracted from the virtual screen for the display on main display unit 2a). The information on the current display area shall include the resolution of the display area, the reference coordinate of the display area, a center coordinate of a focus position on main display unit 2a, and the resolution of the current virtual screen.

Analytical result of HTML (Hyper Text Markup Language) contents performed by content cache 58 is inputted to display area drawing processing unit 56. Display area drawing processing unit 56 extracts display area data, which is necessary for the data to be displayed on the virtual screen having the resolution stored in virtual screen information storage unit 55, from the analytical result inputted from content cache 58 based on the display area decided in display area setting unit 53, and display area drawing processing unit 56 stores the extracted display area data in frame buffer 60.

In the present embodiment, content cache 58 for analyzing the HTML contents generates the virtual screen. The virtual screen is a display screen to be an origin of the data displayed on the display unit (main display unit 2a, sub-display unit 11). In the present embodiment, the screen extracted from the virtual screen can be displayed on the display unit (main display unit 2a, sub-display unit 11).

Syntax analysis unit 59 analyzes contents stored in content cache 58, and transfers the analytical result to display area drawing processing unit 56.

Content cache 58 is a cache memory for storing contents obtained from a server located on a network 100. In content cache 58, the virtual screen is expanded by control unit 30.

Communication control unit 57 obtains the contents from the server located on network 100, and stores the contents in content cache 58.

Video data to be displayed on the display unit (main display unit 2a and sub-display unit 11) is stored in frame buffer 60. In the present embodiment, display contents in main display unit 2a will mainly be described.

Display driver unit 61 actually display the video data stored in frame buffer 60 on the display unit (main display unit 2a and sub-display unit 11).

Input processing unit 51, horizontal and vertical detector 52, display area setting unit 53, display area drawing processing unit 56, syntax analysis unit 59, and display driver unit 61 are configured by executing a predetermined program using a control unit 30 (see Fig. 11). In the portable information terminal according to the present invention, all or part of the components may be configured by hardware such as a dedicated LSI (Large Scale Integration).

Communication control unit 57 includes communication unit 23 and control unit 30. All or part of these components may also be configured by hardware such as a dedicated LSI.

In mobile telephone 1, display area information storage unit 54 and virtual screen information storage unit 55 are configured by memory 27. Content cache 58 and frame buffer 60 are configured by a memory (not shown) in control unit 30.

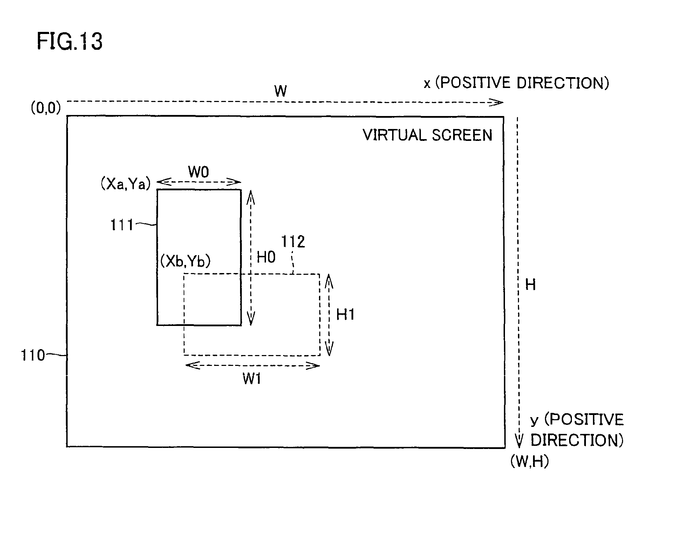

Fig. 13 schematically shows a relationship between the virtual screen and image data displayed on main display unit 2a in mobile telephone 1. In the present embodiment, the image data shall mean various kinds of data, such as a font, a line, a graphic, a photograph, and a motion picture, which can be displayed on a general display device.

Referring to Fig. 13, a virtual screen 110 has a size W in a horizontal direction and a size H in a vertical direction. An x-y plane in which the horizontal direction is set to an x-direction while the vertical direction is set to a y-direction is defined in Fig. 13, the upper-left end of virtual screen 110 is set to an origin (coordinate (0,0)), and a point at the lower-right end is set to a coordinate (W,H).

The image data displayed on main display unit 2a is appropriately extracted from virtual screen 110 by display area drawing processing unit 56. In Fig. 13, a display area 111 corresponding to the portrait-oriented state is expressed by a solid line. In display area 111, the point at the upper-left end is set to a coordinate $(X_a, Y_a)$. Display area 111 has a size W0 in the horizontal direction and a size H0 in the vertical direction.

In the present embodiment, when the state of main display unit 2a is changed between the portrait-oriented state and the landscape-oriented state, the size and position of the area to be extracted from virtual screen 110 and displayed on main display unit 2a are also changed.

Hereinafter, in the specification, it is assumed that display area 111 is the display area corresponding to main display unit 2a before the change in state and a display area 112 is the display area corresponding to main display unit 2a after the change in state.

In Fig. 13, display area 111 before the change in state corresponds to main display unit 2a in the portrait-oriented state, and display area 112 after the change in state corresponds to main display unit 2a in the landscape-oriented state.

Display area 112 has a size XB in the horizontal direction and a size YB in the vertical direction. In display area 112, the coordinate at the upper-left end is set to $(X_b, Y_b)$.

Hereinafter, in the specification, for the sizes of display areas 111 and 112, when main display unit 2a in the portrait-oriented state, it is assumed that H0 is the size in the vertical direction and W0 is the size in the horizontal direction as shown in Fig. 13. When main display unit 2a is in the landscape-oriented state, it is assumed that H1 is the size in the vertical direction and W1 is the size in the horizontal direction. In the specification, when a coordinate is referred to with reference to the drawing, it is assumed that a rightward direction is a positive direction of an x-axis and a downward direction is a positive direction of a γ-axis.

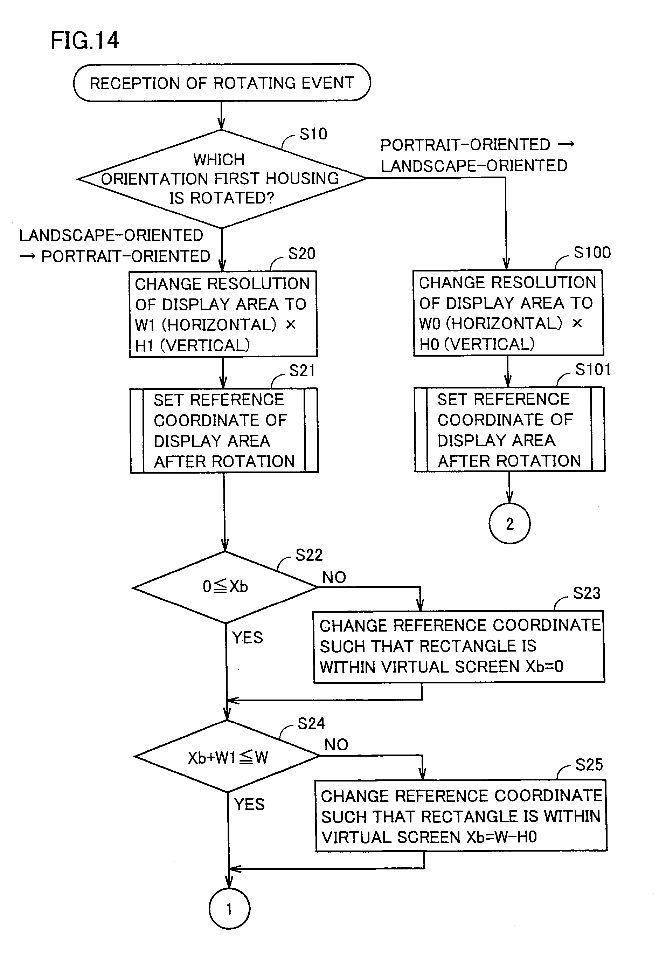

Referring to Figs. 14 to 18, a process in which the display content in the display unit is changed according to the change in state (portrait-oriented or landscape-oriented) of main display unit 2a due to the rotation of first housing 2 will be described below.

Referring to Fig. 14, when horizontal and vertical detector 52 detects rotation (the change in state of portrait-oriented → landscape-oriented or landscape-oriented → portrait-oriented) of first housing 2, control unit 30 detects an orientation of the rotation in Step 510. When control unit 30 determines that first housing 2 is rotated from landscape-oriented state to the portrait-oriented state, control unit 30 advances the process to Step S100. When control unit 30 determines that first housing 2 is rotated from the portrait-oriented state to the landscape-oriented state, control unit 30 advances the process to Step S20.

In Step S20, control unit 30 changes the resolution of the display area to be stored in display area information storage unit 54 to horizontal x vertical = W1 x H1, and advances the process to Step S21. On the other hand, in Step S100, control unit 30 changes the resolution of the display area to be stored in display area information storage unit 54 to horizontal x vertical = X x Y, and advances the process to Step S101. Through the processes in Steps S20 and S100, the resolution stored in display area information storage unit 54 is updated into the resolution which is matched with main display unit 2a after the change in state.

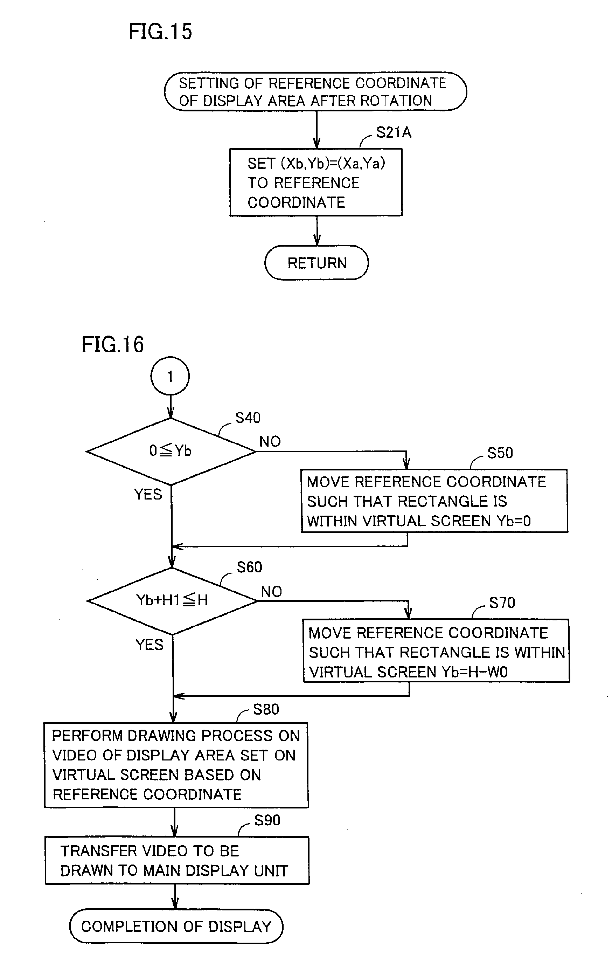

In each of Steps S21 and S101, control unit 30 performs a process of setting the reference coordinate of the display area after the rotation. Fig. 15 is a flowchart showing a sub-routine of the reference coordinate setting process.

Referring to Fig. 15, in Step S21A of the process of setting the reference coordinate of the display area after the rotation, control unit 30 sets $(X_a, Y_a)$ as the reference coordinate of the display area after the change in state $((X_b, Y_b))$ in display area setting unit 53, and the process is returned to the flowchart of Fig. 14.

Referring to Fig. 14 again, control unit 30 advances the process from Step S21 to Step S22, and advances the process from Step S101 1 to Step S102. In the specification, the reference coordinate of the display area shall mean the coordinate at the upper-left end of the display area. That is, $Xb = Xa$ and $Yb = Ya$ are obtained through the processes in Steps S21 and S101.

In Step S22, control unit 30 determines whether or not a relationship of "$0 \leq Xb$" holds for the x-component $Xb$ in the reference coordinate of the display area after the change in state. When the relationship of "$0 \leq Xb$" holds, control unit 30 advances the process to Step S24. When the relationship of "$0 \leq Xb$" does not hold, control unit 3 0 advances the process to Step S23. The case in which the relationship of "$0 \leq Xb$" is satisfied shall mean that the left end of display area 112 is located within virtual screen 110.

In Step S23, control unit 30 corrects the x-component of the reference coordinate into "$Xb = 0$" such that a rectangle (rectangular shape extracted according to the display area after the change in state) is within virtual screen 110, and advances the process to Step S24. By this correction, the x-component of the reference coordinate is corrected such that the left end of the rectangular shape extracted according to the display area after the change in state is aligned with the left end of virtual screen 110.

In Step S24, control unit 30 determines whether or not a relationship of "$Xb + W1 \leq W$" holds for the x-component $Xb$ in the reference coordinate of the display area after the change in state. When the relationship of "$Xb + W1 \leq W$" holds, control unit 30 advances the process to Step S40. When the relationship of "$Xb + W1 \leq W$" does not hold, control unit 30 advances the process to Step S25. "$Xb + W1$" shall mean the position in the x-direction at the right end of display area 112 when the x-component of the reference coordinate is set to $Xb$. The case in which the relationship of "$Xb + W1 \leq W$" is satisfied shall mean that the right end of display area 112 is located within virtual screen 110.

In Step S25, control unit 30 corrects the x-component of the reference coordinate such that the rectangle (rectangular shape extracted according to the display area after the change in state) is within virtual screen 110, and advances the process to Step S40. The correction of this case is expressed by the following equation (1):

$$Xb = W - H0 \tag{1}$$

By this correction, the x-component of the reference coordinate is corrected such that the right end of the rectangular shape extracted according to the display area after the change in state is aligned with the right end of virtual screen 110.

Referring to Fig. 16, in Step S40, control unit 30 determines whether or not a relationship of "$0 \leq Yb$" holds for the y-component $Yb$ in the reference coordinate of the display area after the change in state. When the relationship of "$0 \leq Yb$" holds, control unit 30 advances the process to Step S60. When the relationship of "$0 \leq Yb$" does not hold, control unit 30 advances the process to Step S50. The case in which the relationship of "$0 \leq Yb$" is satisfied shall mean that the upper end of display area 112 is located within virtual screen 110.

In Step S50, control unit 30 corrects the y-component of the reference coordinate into "$Yb = 0$" such that the rectangle (rectangular shape extracted according to the display area after the change in state) is within virtual screen 110, and advances the process to Step S60. By this correction, the y-component of the reference coordinate is corrected such that the lower end of the rectangular shape extracted according to the display area after the change in state is aligned with the upper end of virtual screen 110.

In Step S60, control unit 30 determines whether or not a relationship of "$Xb + H1 \leq H$" holds for the $\gamma$-component $Yb$ in the reference coordinate of the display area after the change in state. When the relationship of "$Yb + H1 \leq H$" holds, control unit 30 advances the process to Step S80. When the relationship of "$Yb + H1 \leq H$" does not hold, control unit 30 advances the process to Step S70. "$Yb + H1 \leq H$" shall mean the position in the $\gamma$-direction at the lower end of display area 112 when the $\gamma$-component of the reference coordinate is set to $Yb$. The case in which the relationship of "$Yb + H1 \leq H$" is satisfied shall mean that the lower end of display area 112 is located within virtual screen 110.

In Step S70, control unit 30 corrects the $\gamma$-component of the reference coordinate such that the rectangle (rectangular shape of the display area after the change in state) is within virtual screen 110, and advances the process to Step S80. The correction of the y-component in the reference coordinate is expressed by the following equation (2):

$$Yb = H - W0 \tag{2}$$

By this correction, the y-component of the reference coordinate is corrected such that the lower end of the rectangular shape extracted according to the display area after the change in state is aligned with the lower end of virtual screen 110.

In Step S80, a drawing process is performed on the video of the display area set on the virtual screen based on the reference coordinate, and control unit 30 advances the process to Step S90.

In Step S90, control unit 30 transfers the video to be drawn to main display unit 2a, and ends the process.

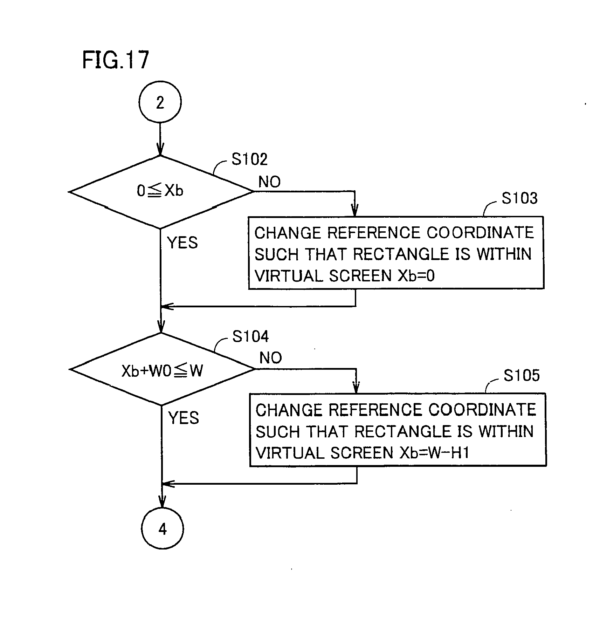

Referring to Fig. 17, in Step S102, control unit 30 determines whether or not a relationship of "$0 \leq Xb$" holds for the x-component Xb in the reference coordinate of the display area after the change in state. When the relationship of "$0 \leq Xb$" holds, control unit 30 advances the process to Step S104. When the relationship of "$0 \leq Xb$" does not hold, control unit 30 advances the process to Step S103. The case in which the relationship of "$0 \leq Xb$" is satisfied shall mean that the left end of display area 112 is located within virtual screen 110.

In Step S103, control unit 30 corrects the x-component of the reference coordinate into "$Xb = 0$" such that the rectangle (rectangular shape extracted according to the display area after the change in state) is within virtual screen 110, and advances the process to Step S104. By this correction, the x-component of the reference coordinate is corrected such that the left end of the rectangular shape extracted according to the display area after the change in state is aligned with the left end of virtual screen 110.

In Step S104, control unit 30 determines whether or not a relationship of "$Xb + W0 \leq W$" holds for the x-component Xb in the reference coordinate of the display area after the change in state. When the relationship of "$Xb + W0 \leq W$" holds, control unit 30 advances the process to Step S 120. When the relationship of "$Xb + W0 \leq W$" does not hold, control unit 30 advances the process to Step S105. "$Xb + W0$" shall mean the position in the x-direction at the right end of display area 112 when the x-component of the reference coordinate is set to Xb. The case in which the relationship of "$Xb + W0 \leq W$" is satisfied shall mean that the right end of display area 112 is located within virtual screen 110.

In Step S105, control unit 30 corrects the x-component of the reference coordinate such that the rectangle (rectangular shape extracted according to the display area after the change in state) is within virtual screen 110, and advances the process to Step S120. The correction of this case is expressed by the following equation (3):

$$Xb = W - H1 \tag{3}$$

By this correction, the x-component of the reference coordinate is corrected such that the right end of the rectangular shape extracted according to the display area after the change in state is aligned with the right end of virtual screen 110.

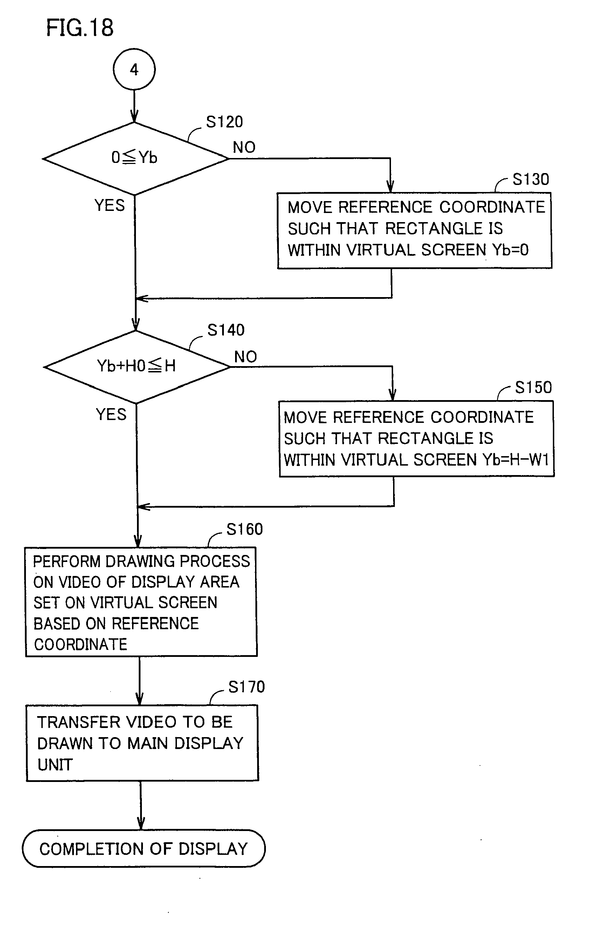

Referring to Fig. 18, in Step S 120, control unit 30 determines whether or not a relationship of "$0 \leq Yb$" holds for the γ-component Yb in the reference coordinate of the display area after the change in state. When the relationship of "$0 \leq Yb$" holds, control unit 30 advances the process to Step S140. When the relationship of "$0 \leq Yb$" does not hold, control unit 30 advances the process to Step S130. The case in which the relationship of "$0 \leq Yb$" is satisfied shall mean that the upper end of display area 112 is located within virtual screen 110.

In Step S 130, control unit 30 corrects the y-component of the reference coordinate into "$Yb = 0$" such that the rectangle (rectangular shape extracted according to the display area after the change in state) is within virtual screen 110, and advances the process to Step S60. By this correction, the y-component of the reference coordinate is corrected such that the right end of the rectangular shape extracted according to the display area after the change in state is aligned with the lower end of virtual screen 110.

In Step S 140, control unit 30 determines whether or not a relationship of "$Yb + H0 \leq H$" holds for the y-component Yb in the reference coordinate of the display area after the change in state. When the relationship of "$Yb + H0 \leq H$" holds, control unit 3 0 advances the process to Step S160. When the relationship of "$Yb + H0 \leq H$" does not hold, control unit 30 advances the process to Step S 150. "$Yb + H0$" shall mean the position in the y-direction at the lower end of display area 112 when the y-component of the reference coordinate is set to Yb. The case in which the relationship of "$Yb + H0 \leq H$" is satisfied shall mean that the lower end of display area 112 is located within virtual screen 110.

In Step S 150, control unit 3 0 corrects the y-component of the reference coordinate such that the rectangle (rectangular shape of the display area after the change in state) is within virtual screen 110, and advances the process to Step S90. The correction of the γ-component in the reference coordinate is expressed by the following equation (4):

$$Yb = H - W1 \tag{4}$$

By this correction, the γ-component of the reference coordinate is corrected such that the lower end of the rectangular shape extracted according to the display area after the change in state is aligned with the lower end of virtual screen 110.

In Step S160, the drawing process is performed on the video of the display area set on the virtual screen based on the reference coordinate, and control unit 3 0 advances the process to Step S170. In Step S 170, control unit 30 transfers the video to be drawn to main display unit 2a, and ends the process.

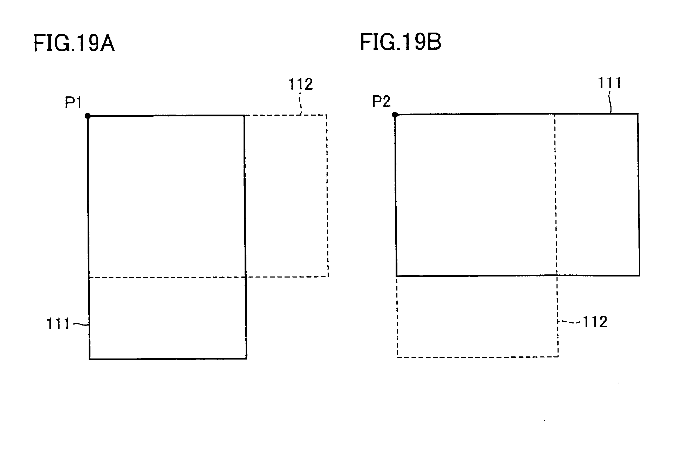

Thus, according to the present embodiment, when main display unit 2a is changed from the portrait-oriented state to the landscape-oriented state, as shown in Fig. 19A, the display area which is extracted from a virtual screen 110 and displayed on main display unit 2a is changed such that a point (P1) at the upper-left end becomes common. Fig. 19A shows that the point at the upper-left end of a display area 111 in virtual screen 110 and the point at the upper-left end of a display area 112 coincide with each other.

According to the present embodiment, when main display unit 2a is changed from the landscape-oriented state to the portrait-oriented state, as shown in Fig. 19B, the display area extracted from virtual screen 110 and displayed on main display unit 2a is changed such that a point (P2) at the upper-left end becomes common. Fig. 19B shows that the point at the upper-left end of display area 111 in virtual screen 110 and the point at the upper-left end of display area 112 coincide with each other.

In the portable information terminal according to the present invention, the display area after the change in state may be decided based on at least the position of the display area before the change in state.

This is, it is not always necessary that the point at the upper-left end is shared as shown in Figs. 19A and 19B.

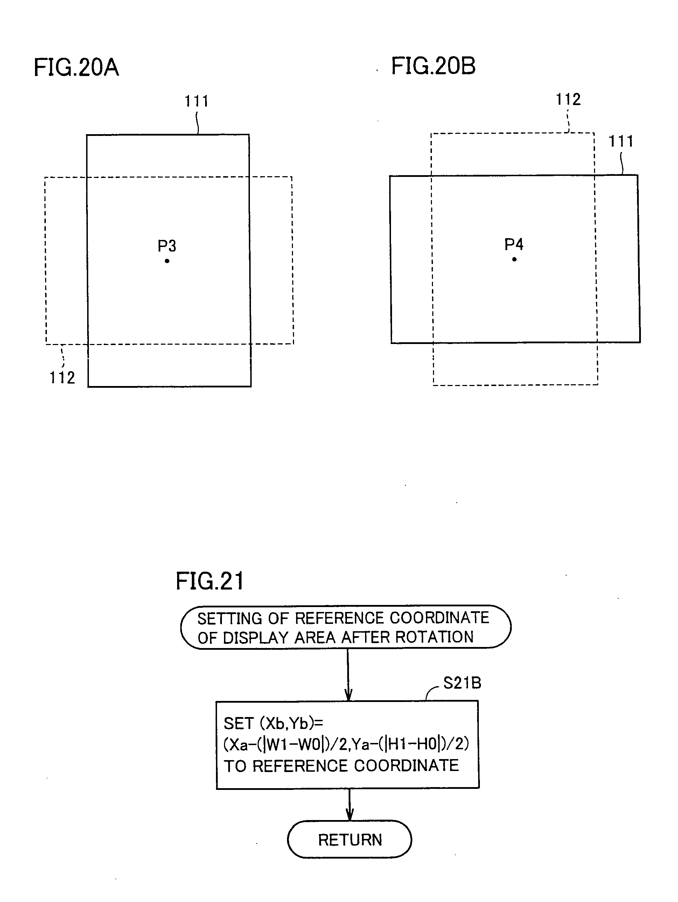

For example, as shown in Fig. 20A or 20B, the display area after the change in state may be decided such that the center point (point P3 or point P4) becomes in common with the center point of the display area before the change in state. Fig. 20A shows the change of the display area according to the change of main display unit 2a from the portrait-oriented state to the landscape-oriented state, and Fig. 20B shows the change of the display area according to the change of main display unit 2a from the landscape-oriented state to the portrait-oriented state. When the display area after the change in state is decided as shown in Figs. 20A and 20B, the process of setting the reference coordinate of the display area after the rotation shown in Fig. 15 is replaced with a process shown in Fig. 21.

Referring to Fig. 21, in Step S21B, control unit 30 sets the x-component Xb of the reference coordinate as shown in the following equation (5):

$$Xb = Xa - (|W1 - W0|)/2 \qquad (5)$$

In Step S41, control unit 30 sets the y-component Yb of the reference coordinate as shown in the following equation (6):

$$Yb = Ya - (|H1 - H0|)/2 \qquad (6)$$

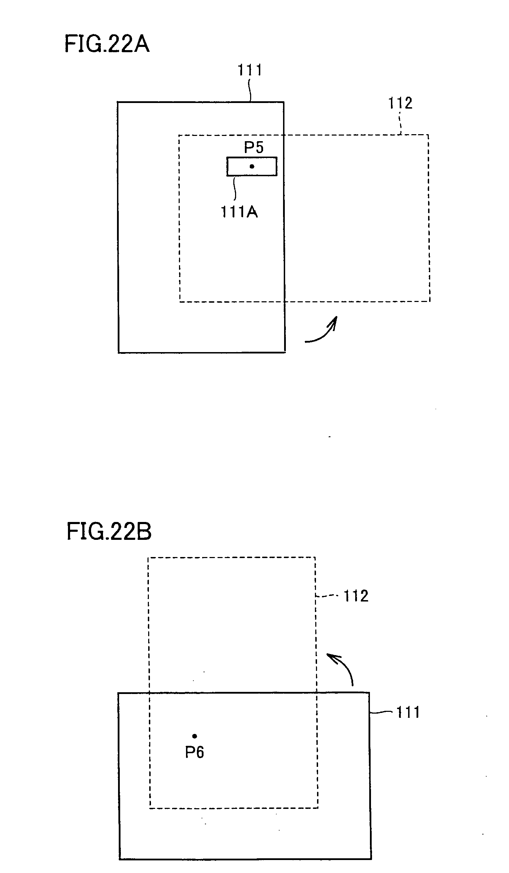

In the portable information terminal according to the present invention, as described above, it is not always necessary that the coordinate of a particular position such as the point at the upper-left end and the center point of the display area after the change in state be set so as to coincide with that of the display area before the change in state. For example, as shown in Fig. 22A or 22B, display area 112 may be decided by rotating display area 111 by a rotation angle of main display unit 2a about a point P5 or a point P6 in display area 111. In Fig. 22A or 22B, for example, point P5 or point P6 can be set to the center point (hereinafter referred to as "focus center") in the vertical and horizontal directions of an area (area 111 A in Fig. 22A) which is focused on in main display unit 2a. For example, the area which is focused on shall mean an area which is reversely displayed when the rectangular area including a character string constituting an e-mail address or URL (Uniform Resource Locator) is reversely displayed by selecting the e-mail address or URL.

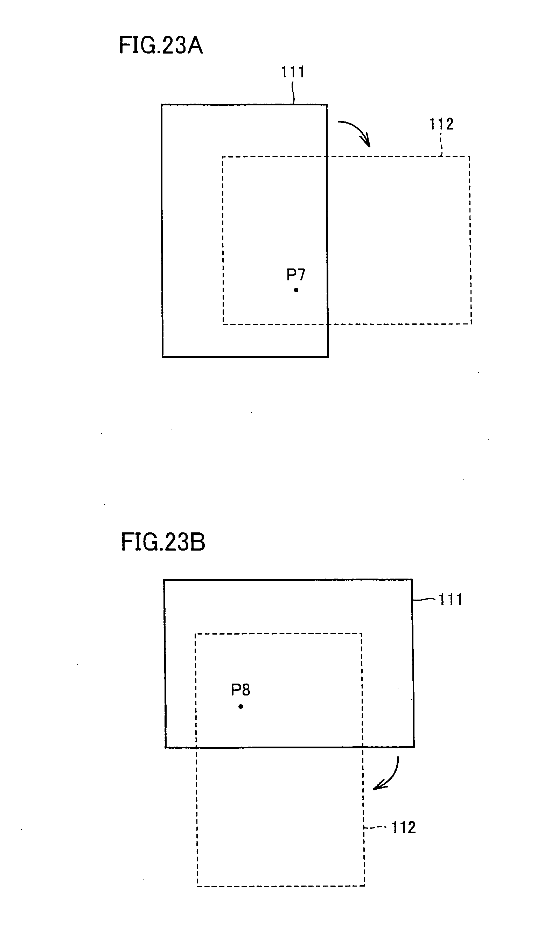

When display area 112 is decided by the rotation, the orientation of the rotation may be changed according to the position of the focus center in display area 111. Specifically, when the focus position is located in an upper half area in the vertical direction of display area 111 as shown in Figs. 22A and 22B, the area where display area 111 is rotated counterclockwise by the rotation angle of main display unit 2a as shown by an arrow in Figs. 22A and 22B is preferably set to display area 112. Figs. 23A and 23B show the focus positions in display area 111 by a point P7 and a point P8 respectively. When the focus position is located in a lower half area in the vertical direction of display area 111 as shown in Figs. 23A and 23B, the area where display area 111 is rotated clockwise by the rotation angle of main display unit 2a as shown by an arrow in Figs. 23A and 23B is preferably set to display area 112.

By obtaining display area 112 as shown in Figs. 22A, 22B, 23A, and 23B, the focus position is located in the left half of display area 112 when display area 112 is in the landscape-oriented state, and the focus position is located in the upper half of display area 112 when display area 112 is in the portrait-oriented state. Generally, a person read characters from upper left. That is, even if the display contents are changed according to the change in state of main display unit 2a, the user easily finds the focus position from the display contents after the change in state by obtaining display area 112 in the above-described manner.

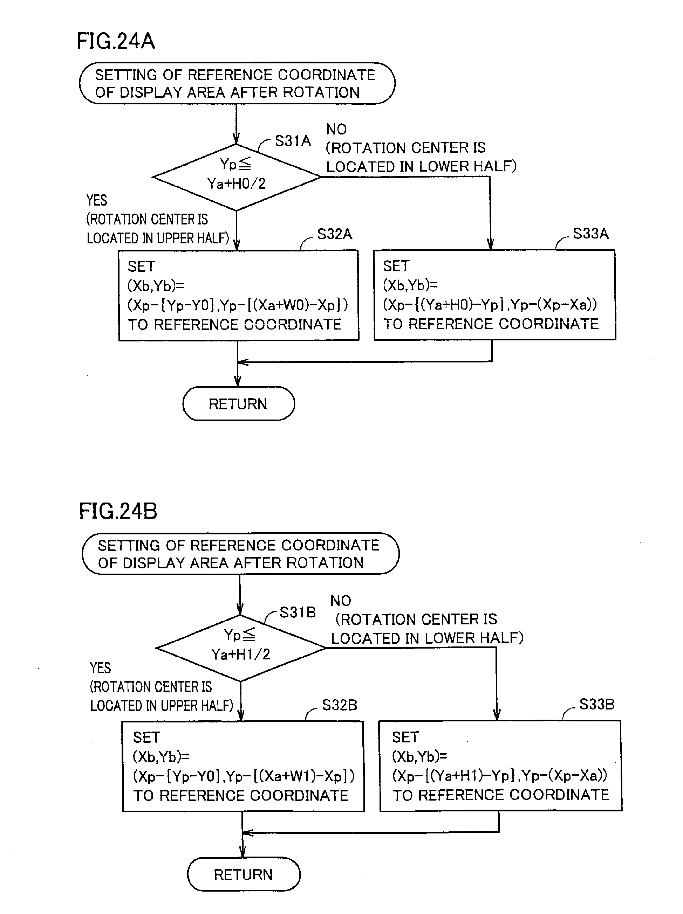

When the display area after the change in state is decided as described above with reference to Figs. 22A, 22B, 23A, and 23B, the process of setting the reference coordinate of the display area after the rotation shown in Fig. 15 is replaced with processes shown in Figs. 24A and 24B. Fig. 24A is a flowchart showing the case in which display area 112 is changed from the portrait-oriented state to the landscape-oriented state, i.e., the process performed as Step S21. Fig. 24B is a flowchart showing the case in which display area 112 is changed from the landscape-oriented state to the portrait-oriented state, i.e., the process performed as Step S 101. In the following description, it is assumed that (Xp,Yp) is the coordinate of the point of the rotation center shown as the points P5 to P8. In mobile telephone 1, the coordinate (Xp,Yp) can be decided by well-know techniques.

Referring to Fig. 24A, in Step S31A, control unit 30 determines whether or not the y-component Yp in the coordinate of the rotation center satisfies the following equation (7). When the y-component Yp satisfies the following equation (7), control unit 30 advances the process to Step S32A. When the y-component Yp does not satisfy the following equation (7), control unit 30 advances the process to Step S33A.

$$Yp \leq Ya + H0/2 \tag{7}$$

Therefore, control unit 30 advances the process to Step S32A when the rotation center is located in the upper half area in the vertical direction of display area 111 before the change in state, and control unit 30 advances the process to Step S33A when the rotation center is located in the lower half area in the vertical direction of display area 111 before the change in state.

In Step S32A, control unit 30 computes the x-coordinate Xb of display area 112 after the change in state according to the following equation (8):

$$Xb = Xp - (Yp + Y0) \tag{8}$$

In Step S32A, control unit 30 computes the y-coordinate Yb of display area 112 after the change in state according to the following equation (9):

$$Yb = Yp - \{(Xa + W0) - Xp\} \tag{9}$$

In Step S33A, control unit 30 computes the x-coordinate Xb of display area 112 after the change in state using the following equation (10):

$$Xb = Xp - \{(Ya + H0) - Yp\} \tag{10}$$

In Step S33A, control unit 30 computes the γ-coordinate Yb of display area 112 after the change in state using the following equation (11):

$$Yb = Yp - (Xp + Xa) \tag{11}$$

On the other hand, referring to Fig. 24B, control unit 30 determines whether or not the y-component Yp in the coordinate of the rotation center satisfies the following equation (12) in Step S31B. When the y-component Yp satisfies the following equation (12), control unit 30 advances the process to Step S32B. When the γ-component Yp does not satisfy the following equation (12), control unit 30 advances the process to Step S33B.

$$Yp \leq Ya + H1/2 \tag{12}$$

Therefore, control unit 30 advances the process to Step S32B when the rotation center is located in the upper half area in the vertical direction of display area 111 before the change in state, and control unit 30 advances the process to Step S33B when the rotation center is located in the lower half area in the vertical direction of display area 111 before the change in state.

In Step S32B, control unit 30 computes the x-coordinate Xb of display area 112 after the change in state according to the following equation (13):

$$Xb = Xp - (Yp + Y0) \qquad (13)$$

In Step S32B, control unit 30 computes the $\gamma$-coordinate Yb of display area 112 after the change in state according to the following equation (14):

$$Yb = Yp - \{(Xa + W1) - Xp\} \qquad (14)$$

In Step S33B, control unit 30 computes the x-coordinate Xb of display area 112 after the change in state using the following equation (15):

$$Xb = Xp - \{(Ya + H1) - Yp\} \qquad (15)$$

In Step S33B, control unit 30 computes the $\gamma$-coordinate Yb of display area 112 after the change in state using the following equation (16):

$$Yb = Yp - (Xp + X0) \qquad (16)$$

In the above embodiment, the mobile telephone is cited as an example of the portable information terminal. However, it is not always necessary that the portable information terminal according to the present invention have a verbal communication function. Accordingly, the portable information terminal may include a personal digital assistant and the like which have no verbal communication function.

Although the present invention has been described and illustrated in detail, it is clearly understood that the same is by way of illustration and example only and is not to be taken by way of limitation, the scope of the present invention being interpreted by the terms of the appended claims.

**Claims**

1. A portable information terminal comprising:

   display means (2a);
   support means (3) for supporting said display means between a first state and a second state different from said first state;
   detection means (52) for detecting a state of said display means;
   generation means (58) for generating a virtual screen; and
   extraction means (56) for extracting image data in a range corresponding to a display area of said display means from said virtual screen, wherein
   said extraction means decides an extraction range of the image data corresponding to the display area of said display means after a change in state based on a range before the change in state, when said detection means detects that the state of said display means is changed between said first state and said second state.

2. The portable information terminal according to claim 1, wherein said extraction means decides said extraction range such that image data displayed at a particular position in said display area before the change in state is displayed at said particular position in said display area after the change in state.

3. The portable information terminal according to claim 2, wherein said particular position is located at an upper-left end of said display area.

4. The portable information terminal according to claim 2, wherein said particular position is located at a center in a vertical direction and a horizontal direction of said display area.

5. The portable information terminal according to claim 1, wherein
said support means rotatably supports said display means,
said display means is rotated by a constant angle to change the state between said first state and said second state, and
said extraction means decides that a range corresponding to said display area before the change in state, the range being rotated by said constant angle about a position on said virtual screen of image data displayed at a predetermined position of the display area, is set to a range of image data extracted from said virtual screen according to said display area after the change in state.

6. The portable information terminal according to claim 5, wherein said predetermined position is located at a center position of an area which is focused on and displayed in said display area.

7. The portable information terminal according to claim 5 or 6, wherein
said extraction means decides that a range after a range corresponding to said display area before the change in state is rotated counterclockwise by said constant angle is set to a range of image data to be extracted according to said display area after the change in state, when said predetermined position is located in an area of an upper half of the display area of said display means, and
said extraction means decides that a range after a range corresponding to said display area before the change in state is rotated clockwise by said constant angle is set to a range of image data to be extracted according to said display area after the change in state, when said predetermined position is located in an area of a lower half of the display area of said display means.

8. A method of controlling a portable information terminal in which display means is supported between a first state and a second state different from said first state, the method comprising the steps of:

generating a virtual screen;
detecting a state of said display means; and
deciding a range of image data to be extracted from said virtual screen according to a display area after a change in state based on a range of image data extracted from said virtual screen corresponding to said display area of said display means before the change in state upon detecting that the state of said display means is changed between said first state and said second state.

FIG.1

FIG.2

FIG.3

FIG.4

## FIG.5

FIG.6

FIG.7

FIG.8

FIG.9

FIG.10

## FIG.11

EP 1 928 156 A1

# FIG.12

PORTABLE TERMINAL

- 51 INPUT PROCESSING UNIT
- 52 HORIZONTAL AND VERTICAL DETECTOR
- 53 DISPLAY AREA SETTING UNIT
- 54 DISPLAY AREA INFORMATION STORAGE UNIT
- 55 VIRTUAL SCREEN INFORMATION STORAGE UNIT
- 56 DISPLAY AREA DRAWING PROCESSING UNIT
- 59 SYNTAX ANALYSIS UNIT
- 58 CONTENT CACHE
- 57 COMMUNICATION CONTROL UNIT
- 100 NETWORK
- 60 FRAME BUFFER
- 61 DISPLAY DRIVER UNIT
- 2a,11 DISPLAY UNIT

EP 1 928 156 A1

FIG.13

## FIG.14

RECEPTION OF ROTATING EVENT

S10
WHICH ORIENTATION FIRST HOUSING IS ROTATED?

PORTRAIT-ORIENTED → LANDSCAPE-ORIENTED

LANDSCAPE-ORIENTED → PORTRAIT-ORIENTED

S20
CHANGE RESOLUTION OF DISPLAY AREA TO W1 (HORIZONTAL) × H1 (VERTICAL)

S100
CHANGE RESOLUTION OF DISPLAY AREA TO W0 (HORIZONTAL) × H0 (VERTICAL)

S21
SET REFERENCE COORDINATE OF DISPLAY AREA AFTER ROTATION

S101
SET REFERENCE COORDINATE OF DISPLAY AREA AFTER ROTATION

2

S22
$0 \leqq Xb$

NO

YES

S23
CHANGE REFERENCE COORDINATE SUCH THAT RECTANGLE IS WITHIN VIRTUAL SCREEN Xb=0

S24
$Xb+W1 \leqq W$

NO

YES

S25
CHANGE REFERENCE COORDINATE SUCH THAT RECTANGLE IS WITHIN VIRTUAL SCREEN Xb=W-H0

1

FIG.15

$$( \text{SETTING OF REFERENCE COORDINATE} \atop \text{OF DISPLAY AREA AFTER ROTATION} )$$

S21A

SET (Xb,Yb)=(Xa,Ya)
TO REFERENCE
COORDINATE

( RETURN )

FIG.16

( 1 )

S40

$0 \leqq Yb$ — NO

S50

MOVE REFERENCE COORDINATE
SUCH THAT RECTANGLE IS
WITHIN VIRTUAL SCREEN Yb=0

YES

S60

$Yb+H1 \leqq H$ — NO

S70

MOVE REFERENCE COORDINATE
SUCH THAT RECTANGLE IS WITHIN
VIRTUAL SCREEN Yb=H-W0

YES

S80

PERFORM DRAWING PROCESS ON
VIDEO OF DISPLAY AREA SET ON
VIRTUAL SCREEN BASED ON
REFERENCE COORDINATE

S90

TRANSFER VIDEO TO BE
DRAWN TO MAIN DISPLAY UNIT

( COMPLETION OF DISPLAY )

# FIG.17

```
        ( 2 )
          │
          ▼
       S102
  ┌───────────┐    NO
 <   0≦Xb      >──────────────┐
  └───────────┘               ▼                    S103
        │ YES          ┌──────────────────────────────┐
        │              │ CHANGE REFERENCE COORDINATE   │
        │              │ SUCH THAT RECTANGLE IS WITHIN  │
        │              │ VIRTUAL SCREEN Xb=0            │
        │              └──────────────────────────────┘
        │◄───────────────────────┘
        ▼
       S104
  ┌───────────┐    NO
 <  Xb+W0≦W    >──────────────┐
  └───────────┘               ▼                    S105
        │ YES          ┌──────────────────────────────┐
        │              │ CHANGE REFERENCE COORDINATE   │
        │              │ SUCH THAT RECTANGLE IS WITHIN  │
        │              │ VIRTUAL SCREEN Xb=W−H1         │
        │              └──────────────────────────────┘
        │◄───────────────────────┘
        ▼
      ( 4 )
```

## FIG.18

```
        ( 4 )
          │
          ▼
```

S120

0 ≦ Yb ──NO──→ S130

MOVE REFERENCE COORDINATE SUCH THAT RECTANGLE IS WITHIN VIRTUAL SCREEN Yb=0

YES

S140

Yb+H0 ≦ H ──NO──→ S150

MOVE REFERENCE COORDINATE SUCH THAT RECTANGLE IS WITHIN VIRTUAL SCREEN Yb=H−W1

YES

S160

PERFORM DRAWING PROCESS ON VIDEO OF DISPLAY AREA SET ON VIRTUAL SCREEN BASED ON REFERENCE COORDINATE

S170

TRANSFER VIDEO TO BE DRAWN TO MAIN DISPLAY UNIT

COMPLETION OF DISPLAY

FIG.19A

FIG.19B

# FIG.20A

111

P3

112

# FIG.20B

112

111

P4

# FIG.21

SETTING OF REFERENCE COORDINATE
OF DISPLAY AREA AFTER ROTATION

S21B

SET (Xb,Yb)=
(Xa−(|W1−W0|)/2,Ya−(|H1−H0|)/2)
TO REFERENCE COORDINATE

RETURN

FIG.22A

FIG.22B

FIG.23A

111

112

P7

FIG.23B

111

P8

112

## FIG.24A

$$\text{SETTING OF REFERENCE COORDINATE} \atop \text{OF DISPLAY AREA AFTER ROTATION}$$

S31A

$Yp \leqq Ya+H0/2$

NO
(ROTATION CENTER IS
LOCATED IN LOWER HALF)

YES
(ROTATION CENTER IS
LOCATED IN UPPER HALF)

S32A

SET
$(Xb,Yb)=$
$(Xp-\{Yp-Y0\},Yp-\{(Xa+W0)-Xp\})$
TO REFERENCE COORDINATE

S33A

SET
$(Xb,Yb)=$
$(Xp-\{(Ya+H0)-Yp\},Yp-(Xp-Xa))$
TO REFERENCE COORDINATE

RETURN

## FIG.24B

$$\text{SETTING OF REFERENCE COORDINATE} \atop \text{OF DISPLAY AREA AFTER ROTATION}$$

S31B

$Yp \leqq Ya+H1/2$

NO
(ROTATION CENTER IS
LOCATED IN LOWER HALF)

YES
(ROTATION CENTER IS
LOCATED IN UPPER HALF)

S32B

SET
$(Xb,Yb)=$
$(Xp-\{Yp-Y0\},Yp-\{(Xa+W1)-Xp\})$
TO REFERENCE COORDINATE

S33B

SET
$(Xb,Yb)=$
$(Xp-\{(Ya+H1)-Yp\},Yp-(Xp-Xa))$
TO REFERENCE COORDINATE

RETURN

FIG.25B

901  902

FIG.25D

901  902

FIG.25A

900

FIG.25C

901  902

FIG.26

905

(0,0)

907

906

38

**European Patent Office**

## EUROPEAN SEARCH REPORT

Application Number

EP 07 02 1323

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/240873 A1 (YOU JEONG-MIN [KR] ET AL) 26 October 2006 (2006-10-26)<br>* abstract *<br>* figures 3-13B *<br>* paragraphs [0030] - [0034] *<br>* paragraphs [0040] - [0062] *<br>----- | 1-8 | INV.<br>H04M1/02 |
| X | EP 1 357 726 A (NIPPON ELECTRIC CO [JP]) 29 October 2003 (2003-10-29)<br>* paragraphs [0018] - [0022] *<br>* paragraphs [0026] - [0042] *<br>* paragraphs [0047] - [0060] *<br>* claims 1-9 *<br>* figures 2a-2d *<br>----- | 1-8 | |
| X | US 2003/085870 A1 (HINCKLEY KENNETH P [US]) 8 May 2003 (2003-05-08)<br>* abstract *<br>* paragraphs [0045] - [0050]; figures 11,12,14-18 *<br>* paragraphs [0099] - [0106] *<br>* paragraphs [0126] - [0135] *<br>----- | 1-8 | TECHNICAL FIELDS SEARCHED (IPC)<br><br>H04M<br>H04N<br>G06F |

The present search report has been drawn up for all claims

| Place of search | Date of completion of the search | Examiner |
|---|---|---|
| Munich | 30 April 2008 | Maciejewski, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 02 1323

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2008

| Patent document cited in search report | | Publication date | Patent family member(s) | | Publication date |
|---|---|---|---|---|---|
| US 2006240873 | A1 | 26-10-2006 | NONE | | |
| EP 1357726 | A | 29-10-2003 | CN | 1455613 A | 12-11-2003 |
| | | | CN | 1571433 A | 26-01-2005 |
| | | | HK | 1060443 A1 | 14-10-2005 |
| | | | JP | 4061473 B2 | 19-03-2008 |
| | | | JP | 2003319043 A | 07-11-2003 |
| | | | US | 2003203747 A1 | 30-10-2003 |
| US 2003085870 | A1 | 08-05-2003 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006297989 A
- JP 2004356975 A